# EUROPEAN PATENT APPLICATION

(11) **EP 3 998 656 A1**
(43) Date of publication of application: **18.05.2022**
(21) Application number: 20837624.4
(22) Date of filing: 10.07.2020
(51) Int. Cl.: H01M 4/133, H01M 4/66, H01M 4/80, H01G 11/22, H01G 11/26, H01G 11/40, H01G 11/42, H01G 11/70

(54) **METAL SHEET HAVING CARBON MATERIAL, ELECTRODE FOR ELECTRICITY STORAGE DEVICE, AND ELECTRICITY STORAGE DEVICE**

(30) Priority: 10.07.2019 JP 2019128538
(71) Applicant: SEKISUI CHEMICAL CO., LTD., Osaka-shi Osaka 530-8565 (JP)
(72) Inventor: OONISHI, Shigekatsu, Mishima-gun, Osaka 618-0021 (JP); NAKASUGA, Akira, Mishima-gun, Osaka 618-0021 (JP); SUN, Rende, Mishima-gun, Osaka 618-0021 (JP); SASAGAWA, Naoki, Mishima-gun, Osaka 618-0021 (JP)
(74) Representative: Ter Meer Steinmeister & Partner
(86) International application number: PCT/JP2020/026944
(87) International publication number: WO 2021/006327

(57) **Abstract**

Provided is a metal sheet having a carbon material capable of stably exhibiting excellent characteristics when used for an electrode of an electricity storage device. A metal sheet having a carbon material includes a porous metal sheet provided with a transition metal present on a surface and a carbon material of at least one of a carbon fiber and a carbon particle, the carbon material being formed from the porous metal sheet, the carbon material being disposed in a pore of the porous metal sheet.

## Description

### TECHNICAL FIELD

The present invention relates to a metal sheet having a carbon material, and an electrode for an electricity storage device and an electricity storage device using the metal sheet having a carbon material.

### BACKGROUND ART

In recent years, research and development of electricity storage devices such as capacitors and lithium-ion secondary batteries have been actively conducted for mobile devices, hybrid vehicles, electric vehicles, household power storage applications, and the like. As an electrode material of such an electricity storage device, a carbon material such as graphite, activated carbon, carbon nanofibers, and carbon nanotubes is widely used from an environmental aspect.

Patent Document 1 below discloses an electric double layer capacitor including a polarizable electrode made of coin stacked graphite fibers or open-ended carbon nanotubes. In Patent Document 1, a polarizable electrode is obtained by molding a slurry prepared by mixing a conductive polymer, a binder, and a solvent with the carbon material as described above into a plate shape. In addition, the obtained polarizable electrode is laminated and pressure-bonded on a collecting electrode.

Patent Document 2 below discloses a capacitor electrode including a composite electrode containing a conductive polymer, carbon nanotubes, and a binder, and a collecting electrode electrically joined to the composite electrode. In Patent Document 2, a current collecting layer is formed by coating the collecting electrode with a non-fibrous carbon paste in which non-fibrous carbon and a binder are dispersed in a solvent. A conductive paste containing carbon nanotubes, a binder, and a conductive polymer is applied onto the obtained current collecting layer to form the composite electrode.

### Related Art Documents

### Patent Documents

Patent Document 1: JP 2005-136020 A
Patent Document 2: JP 2009-277760 A

### SUMMARY OF THE INVENTION

### PROBLEMS TO BE SOLVED BY THE INVENTION

However, in the capacitors of Patent Document 1 and Patent Document 2, since a resin component such as a binder is used, there is the problem that sufficient capacitance characteristics cannot be obtained.

In addition, at the time of producing an electricity storage device, pressure may be applied to an electrode by pressing or the like. When pressure is applied to the electrodes of Patent Document 1 and Patent Document 2, carbon fibers and carbon particles provided on the current collector may be crushed or peeled off. In this case, the density of the carbon fibers and the carbon particles is lowered, and the characteristics of the electricity storage device may be deteriorated. In addition, when charging and discharging are repeated, the carbon fibers and the carbon particles may be peeled off. Therefore, there is the problem that cycle characteristics are deteriorated and that stable performance cannot be obtained.

An object of the present invention is to provide a metal sheet having a carbon material capable of stably exhibiting excellent characteristics when used for an electrode of an electricity storage device, and an electrode for an electricity storage device and an electricity storage device using the metal sheet having a carbon material.

### MEANS FOR SOLVING THE PROBLEMS

A metal sheet having a carbon material according to the present invention includes: a porous metal sheet provided with a transition metal present on a surface; and a carbon material of at least one of a carbon fiber and a carbon particle, the carbon material being formed from the porous metal sheet, the carbon material being disposed in a pore of the porous metal sheet.

In a specific aspect of the metal sheet having a carbon material according to the present invention, the carbon material is present inside the porous metal sheet.

In another specific aspect of the metal sheet having a carbon material according to the present invention, a ratio of the carbon material in the pore of the porous metal sheet is increased by compressing and deforming the metal sheet having a carbon material.

In still another specific aspect of the metal sheet having a carbon material according to the present invention, a content of the carbon material in the pore of the porous metal sheet is 20 vol% or more and 70 vol% or less.

In still another specific aspect of the metal sheet having a carbon material according to the present invention, the transition metal contains at least one selected from the group consisting of nickel, iron, and cobalt.

An electrode for an electricity storage device according to the present invention includes the metal sheet having a carbon material configured according to the present invention, the porous metal sheet being a current collector.

An electricity storage device according to the present invention includes the electrode for an electricity storage device configured according to the present invention.

### EFFECT OF THE INVENTION

According to the present invention, a metal sheet having a carbon material capable of stably exhibiting excellent characteristics when used for an electrode of an electricity storage device, and an electrode for an electricity storage device and an electricity storage device using the metal sheet having a carbon material can be provided.

### BRIEF DESCRIPTION OF DRAWINGS

[Fig. 1] Fig. 1 is a scanning electron micrograph (SEM photograph) of a porous metal sheet A at a magnification of 50 times.
[Fig. 2] Fig. 2 is a scanning electron micrograph (SEM photograph) at a magnification of 50 times of a metal sheet in which carbon fibers/carbon particles have been formed from the porous metal sheet A.
[Fig. 3] Fig. 3 is a scanning electron micrograph (SEM photograph) at a magnification of 20,000 times of the metal sheet in which carbon fibers/carbon particles have been formed from the porous metal sheet A.
[Fig. 4] Fig. 4 is a scanning electron micrograph (SEM photograph) at a magnification of 8,000 times of a metal sheet in which carbon fibers/carbon particles have been formed from the porous metal sheet A.
[Fig. 5] Fig. 5 is a scanning electron micrograph (SEM photograph) at a magnification of 20,000 times of the metal sheet in which carbon fibers/carbon particles have been formed from the porous metal sheet A.
[Fig. 6] Fig. 6 is a photograph of a porous metal sheet B at a magnification of 5 times.
[Fig. 7] Fig. 7 is a photograph at a magnification of 5 times of a metal sheet obtained by forming carbon fibers/carbon particles from the porous metal sheet B and then compressing the sheet to a thickness of 0.75 mm.

### MODES FOR CARRYING OUT THE INVENTION

Details of the present invention will be described below.

### (Metal sheet having carbon material)

A metal sheet having a carbon material according to the present invention includes a porous metal sheet and at least one carbon material (hereinafter may be referred to as carbon fibers/carbon particles) of carbon fibers and carbon particles formed from the porous metal sheet.

The porous metal sheet has a three-dimensional network structure. More specifically, the porous metal sheet is a sheet of a porous metal body having continuous pores. In addition, the porous metal sheet may be conductive and provided with a transition metal present on a surface of the metal. Specifically, the sheet may be a porous metal sheet of a transition metal or a porous metal sheet plated with a transition metal. Since the transition metal needs to be brought into contact with a precursor of carbon in a chemical vapor deposition (CVD) reaction to be described later, it is desirable that about 30 to 100% of the transition metal be present on the surface of the porous metal sheet. It is desirable that the exposure amount be larger as the reaction is performed at a lower temperature. Examples of such a transition metal include nickel, iron, and cobalt. These transition metals may be used singly or in combination of two or more kinds thereof. In addition, the porous metal sheet desirably has a structure capable of supporting the load in the film thickness direction.

Carbon fibers/carbon particles are disposed in the pores of the porous metal sheet. In the pores of the porous metal sheet, the carbon fibers/carbon particles modify the surface of the metal body constituting the porous metal sheet. If necessary, the metal sheet having a carbon material is desirably compressed by high-pressure pressing. In this case, the thickness of the metal sheet having a carbon material is reduced to, for example, 0.1 to 0.5 times, and the pore volume is reduced. Therefore, the density of the carbon fibers/carbon particles in the pores becomes high.

For example, when a porous metal sheet having pores filled with carbon fibers/carbon particles at 10 vol%, a film thickness of 1.0 mm, and a porosity of 98 vol% is compressed to a film thickness of 0.2 mm, the content of carbon fibers/carbon particles in the pores is calculated to be 10 vol% to 54 vol% because the volume of the carbon fibers/carbon particles does not change.

Specifically, the pore volume changes from 0.98 (= 1 - 0.02) before compression to 0.18 (= 0.2 - 0.02) after compression. On the other hand, the volume of the carbon fibers/carbon particles does not change between 0.098 before compression and 0.098 after compression. Therefore, the content of the carbon fibers/carbon particles in the pores is increased from 10 vol% (= 0.098/0.98) before compression to 54 vol% (= 0.098/0.18) after compression.

In the present invention, it is desirable that the carbon fibers/carbon particles be disposed inside the porous metal sheet in the thickness direction of the metal sheet having a carbon material. That is, it is desirable that the carbon fibers/carbon particles do not protrude from the porous metal sheet in the thickness direction of the metal sheet having a carbon material.

Therefore, in the metal sheet having a carbon material, if necessary, carbon fibers/carbon particles formed in excess of the film thickness of the porous metal sheet may be scraped off. The carbon fibers/carbon particles can be scraped off with, for example, a squeegee.

In the metal sheet having a carbon material, the carbon fibers/carbon particles produced to a film thickness equal to or more than the film thickness of the porous metal sheet may be compressed in the sheet thickness direction as necessary. In this case, it is desirable that the carbon fibers/carbon particles do not protrude beyond the thickness of the metal sheet.

In addition, in the metal sheet having a carbon material, if necessary, carbon is produced again after pressing or the like, so that carbon fibers/carbon particles can be more densely produced in the pores, and the connection between the metal sheet and the carbon fibers/carbon particles can be further strengthened.

Since the metal sheet having carbon fibers/carbon particles of the present invention has the above configuration, it can stably exhibit excellent properties when used for an electrode of an electricity storage device.

Conventionally, when a carbon material such as activated carbon, carbon black, and carbon nanotubes is used for an electrode of an electricity storage device, the electrode is often formed by mixing a resin component such as a binder with the carbon material. However, when a resin component such as a binder is mixed to form an electrode, sufficient capacity characteristics may not be obtained.

In addition, at the time of producing an electricity storage device, pressure may be applied to an electrode by pressing or the like. However, in an electrode in which a carbon material is provided on a current collector, the carbon material may be deformed or peeled off by pressure. In this case, the density of the carbon material decreases, and characteristics of the electricity storage device and the like may deteriorate. In addition, when the carbon material is used for an electricity storage device and charge-discharge is repeated, the carbon material may be peeled off. Therefore, the cycle characteristics may be deteriorated, leading to failure in providing stable performance.

In the metal sheet having a carbon material according to the present invention, as described above, the carbon fibers/carbon particles modify the surface of the metal body constituting the porous metal sheet. Therefore, an electrode can be formed without using a binder, and the capacity characteristics of the electricity storage device can be enhanced. Further, since a step of sticking the carbon fibers/carbon particles to the current collector using the binder is not required, the productivity can be enhanced.

In addition, since the metal sheet having a carbon material has a cage-like void structure and the carbon fibers/carbon particles are disposed in the pores of the porous metal sheet, even when pressure is applied, the surface stress on the metal sheet having a carbon material is not applied to the internal carbon fibers/carbon particles, and the carbon fibers/carbon particles are less likely to be crushed or peeled off. Therefore, the density change of the carbon fibers/carbon particles is small, and the characteristics of the electricity storage device and the like are hardly deteriorated. In addition, even when used in an electricity storage device and repeatedly subjected to charging and discharging, the carbon fibers/carbon particles are hardly peeled off, and thus excellent cycle characteristics and stable performance can be exhibited.

Examples of the porous metal sheet used in the present invention include a metal sheet having a jangle-gym structure, a porous metal sheet having spherical pores, a sheet in which fiber contact portions are metal-bonded in a mat having a rigid frame structure made of metal fibers, a sheet in which metal fiber chips are metal-bonded at the contact portions, a sheet in which several lattice-shaped metal meshes are bonded, and a metal sheet having a honeycomb structure. As described above, a metal sheet having a load-bearing pore structure can be used.

However, even in the case of porous metal fibers, in the case of a three-dimensional woven fabric of fibers or a three-dimensional nonwoven structure (blanket) of fibers in which the fibers of the metal sheet are not bonded at a short distance, the metal sheet has flexible elasticity in the film thickness direction. Therefore, it is desirable that a three-dimensional woven fabric of fibers or a three-dimensional nonwoven structure (blanket) of fibers in which the fibers of the metal sheet are not bonded at a short distance be not employed.

In the metal sheet having a carbon material, carbon fibers/carbon particles are contained in individual metal pores. Therefore, as compared with a conventional vertical connection structure of a carbon material and a metal sheet, in the porous metal sheet structure, the distance from the carbon material to the electrode is short, and the thickness of the carbon layer can be large.

For example, when a carbon layer having a thickness of 100 to 200 µm is connected in a vertical connection structure, the carbon-metal distance between the upper surface of the carbon layer and the metal electrode layer is 100 to 200 µm in calculation.

On the other hand, when the carbon material is packed into a porous metal sheet structure in which the carbon layer (≈ porous metal sheet) has a thickness of 1,200 µm. and in which the inner diameter of the pores is 450 µm, the maximum carbon-metal distance is 225 µm, which is half of the inner diameter, and the maximum carbon-metal distance becomes 112.5 µm when the porous metal is further compressed to half the thickness. As described above, the maximum carbon-metal distance can be reduced, and the resistance value of the carbon portion is lowered, which is advantageous.

As such a porous metal sheet, a commercially available product may be used, and for example, a porous metal body having spherical pores ("Celmet (registered trademark)" manufactured by Sumitomo Electric Industries, Ltd.) or the like can be used.

The pore density, which is the porosity of the porous metal sheet, is calculated by (sheet weight/metal material specific gravity)/(sheet film thickness) and is preferably 80% or more, more preferably 90% or more, and still more preferably 97% or more. The upper limit of the pore density of the porous metal sheet is, for example, 99%.

When the pore density of the porous metal sheet is the above lower limit or more, the carbon fibers/carbon particles can be more easily disposed in the pores.

The thickness of the porous metal sheet is not particularly limited but can be, for example, 0.1 mm or more and 5 mm or less.

In the pores of the porous metal sheet, the carbon fibers/carbon particles used in the present invention modify the surface of the metal body constituting the porous metal sheet.

As the carbon fibers/carbon particles, for example, carbon nanotubes, carbon nanofibers, grape-like carbon, or grape-like carbon fibers can be used. These materials may be used singly or in combination of two or more kinds thereof. In the case of carbon fibers, the carbon fibers are desirably bonded to the surface of the metal body constituting the porous metal sheet in the pores of the porous metal sheet.

The specific surface area of the carbon fibers/carbon particles is preferably 200 m²/g or more, more preferably 400 m²/g or more, still more preferably 1,600 m²/g or more.

The content of the carbon fibers/carbon particles is preferably 5 vol% or more, more preferably 20 vol% or more, still more preferably 50 vol% or more, based on the volume percentage of the pores of the porous metal sheet. When the content of the carbon fibers/carbon particles is the above lower limit or more, conductivity can be further enhanced, the surface area is increased, and battery performance and capacitor performance can be further enhanced. The upper limit of the content of the carbon fibers/carbon particles is not particularly limited but is, for example, 70 vol%.

The method for modifying the surface of the metal body with carbon fibers/carbon particles is not particularly limited, but for example, a CVD method can be used. In the CVD method, carbon fibers/carbon particles can be formed, for example, by bringing a carbon source into contact with the surface of the metal body in the porous metal sheet.

The temperature at which the carbon source is brought into contact with the surface of the metal body is not particularly limited but may be, for example, 400°C to 700°C.

The carbon source used in the CVD method is not particularly limited. As the carbon source, for example, a carbon-containing compound with 1 to 30 carbon atoms, preferably 1 to 7 carbon atoms, more preferably 1 to 4 carbon atoms, still more preferably 1 or 2 carbon atoms can be used. Examples of such a compound include carbon monoxide, hydrocarbons, and alcohols. As the hydrocarbon, a saturated hydrocarbon such as methane, ethane, and propane or an unsaturated hydrocarbon such as ethylene and acetylene can be appropriately used. As the alcohol, methanol, ethanol, or the like can be appropriately used. In particular, when a hydrocarbon such as ethylene is used, carbon fibers/carbon particles are easily produced at a low temperature from the surface of the metal body, which is preferable.

Before the CVD treatment step, a heat treatment step (for example, at 800°C) in an oxidizing gas atmosphere may be further performed. By roughening the surface of the metal in a previous step, the reactivity in the CVD treatment can be further enhanced.

The oxidizing gas is not particularly limited, but for example, 1 to 5% oxygen gas diluted with nitrogen gas or argon gas can be used.

In the present invention, as described above, since the CVD treatment is performed on the porous metal sheet in which a transition metal such as nickel, iron, and cobalt exists on the surface, carbon fibers/carbon particles can be produced on the surface of the metal body constituting the porous metal sheet, which has been conventionally difficult.

### (Electrode for electricity storage device and electricity storage device)

The electricity storage device of the present invention is not particularly limited, and examples thereof include a nonaqueous electrolyte primary battery, an aqueous electrolyte primary battery, a nonaqueous electrolyte secondary battery, an aqueous electrolyte secondary battery, a capacitor, an electric double layer capacitor, and a lithium-ion capacitor. In addition, since a desalination device for capacitive deionization uses a principle of electrochemically removing ions similarly to a capacitor, the type of the device for capacitive deionization for desalination is only a capacitor.

The thickness of the porous metal sheet is not particularly limited but can be, for example, 0.1 to 1 mm in the case of an electricity storage device and 0.2 to 5 mm in the case of a desalination device.

The electrode for an electricity storage device of the present invention is a pair of polarizable electrodes or a pair of electrodes such as a positive electrode and a negative electrode. In the present invention, one of the pair of electrodes may be formed of the above-described metal sheet having a carbon material, or both electrodes may be formed of the above-described metal sheet having a carbon material.

In the electrode for an electricity storage device and the electricity storage device of the present invention, since at least one of the pair of electrodes is formed of the above-described metal sheet having a carbon material, excellent characteristics can be stably exhibited when the electrode is used for an electrode of an electricity storage device.

It is preferable that these electrodes be electrically connected smoothly from the collecting electrode to the electrode end (for example, carbon fibers/carbon particles), like a leaf vein of a plant connected from a thick trunk to a thin portion at the end, and have a large surface area/volume and a large surface area/weight (i.e., a large surface area of terminal carbon fibers or carbon particles). Therefore, if the carbon material can be fixed to the same extent (same performance) even in the absence of the binder, it is desirable that the binder be not included because the binder is generally nonconductive.

When the electricity storage device of the present invention is used for a capacitor, an aqueous solution or a nonaqueous (organic) solution may be used as an electrolytic solution of the capacitor.

Examples of the aqueous electrolytic solution include an electrolytic solution using water as a solvent and using sulfuric acid, potassium hydroxide, or the like as an electrolyte.

On the other hand, as the nonaqueous electrolytic solution, for example, an electrolytic solution using the following solvent, electrolyte, and ionic liquid can be used. Specific examples of the solvent include acetonitrile, propylene carbonate (PC), ethylene carbonate (EC), dimethyl carbonate (DMC), diethyl carbonate (DEC), and acrylonitrile (AN) .

Examples of the electrolyte include lithium hexafluorophosphate (LiPF₆), lithium tetrafluoroborate (LiBF₄), tetraethylammonium tetrafluoroborate (TEABF₄), and triethylmethylammonium tetrafluoroborate (TEMABF₄).

Furthermore, as the ionic liquid, for example, an ionic liquid containing the following cation and anion can be used. Examples of the cation include an imidazolium ion, a pyridinium ion, a piperidium ion, a pyrrolidium ion, an ammonium ion, and a phosphonium ion. Examples of the anion include a boron tetrafluoride ion (BF⁴⁻), a boron hexafluoride ion (BF⁶⁻), an aluminum tetrachloride ion (AlCl⁴⁻), a tantalum hexafluoride ion (TaF⁶⁻) , a tris(trifluoromethanesulfonyl)methane ion (C(CF₃SO₂)³⁻), and bisfluorosulfonylimide. When the ionic liquid is used, the driving voltage of the electricity storage device can be further improved. That is, the energy density can be further increased.

The separator used in the electricity storage device can be, for example, disposed between a pair of electrodes. A product formed by disposing a separator between the positive electrode side and the negative electrode side and winding the stack or by stacking the separator may be used.

The separator is not particularly limited but can be made of, for example, an insulating material capable of holding an electrolytic solution. As the separator, for example, a porous film base material such as polypropylene and polyethylene, a glass fiber base material, a nonwoven fabric, or a cellulose-based base material such as electric field capacitor paper and kraft paper can be used.

Next, the present invention will be clarified by giving specific examples and a comparative example of the present invention. Note that the present invention is not limited to the following examples.

### (Example 1)

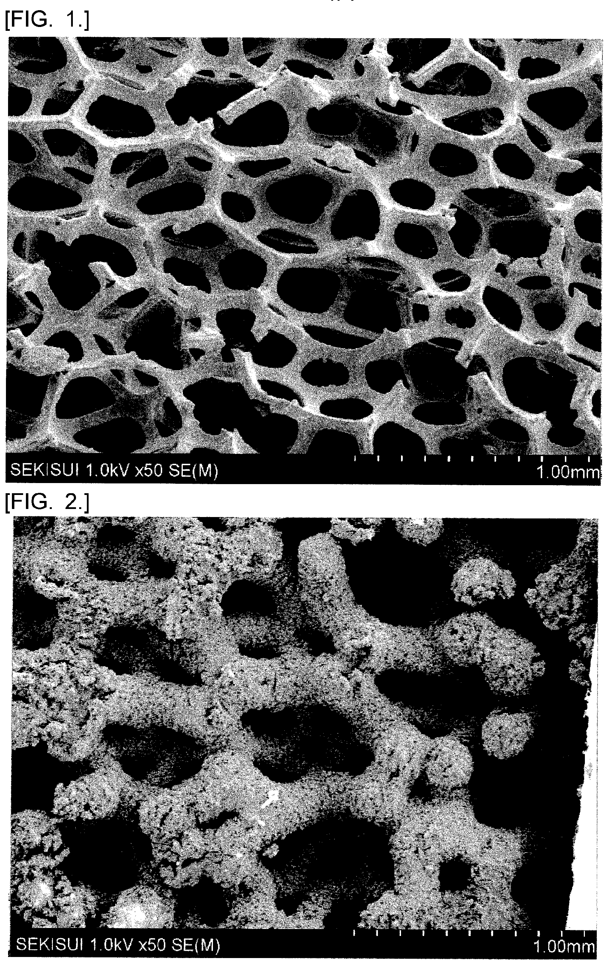

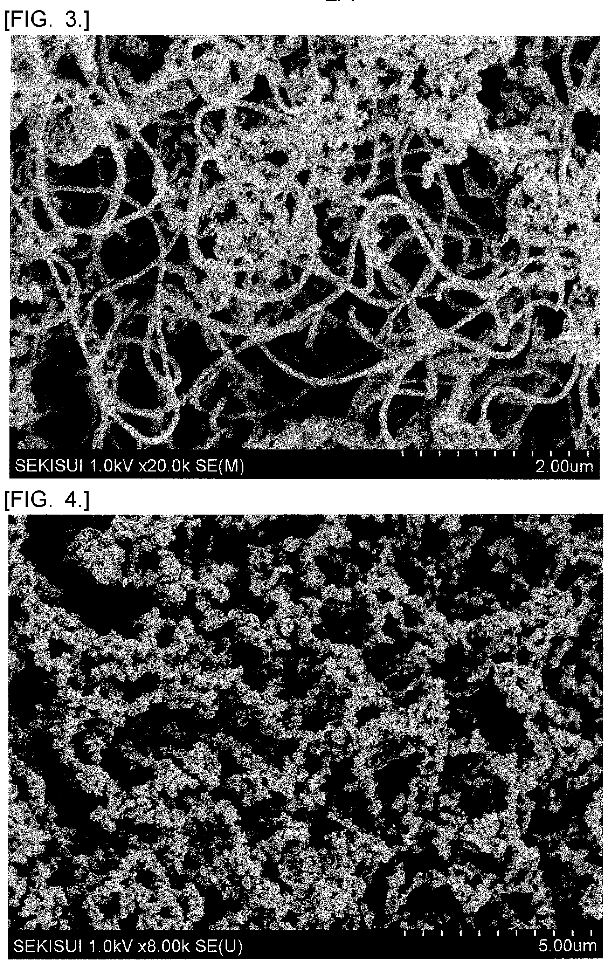

A porous metal sheet A ("Celmet (registered trademark) #8" manufactured by Sumitomo Electric Industries, Ltd., shape: 20 mm × 20 mm × 1.2 mm, Ni present as a transition metal on the surface) was subjected to a thermal CVD treatment for 20 minutes in an atmosphere of 450°C, an ethylene gas concentration of 100%, and a gas flow rate of 50 cc/min in a quartz tube having an inner diameter of 32 mm to obtain a metal sheet in which carbon fibers/carbon particles were formed. Before and after the flow of ethylene gas for 20 minutes, 100% nitrogen gas was caused to flow at a gas flow rate of 100 cc/min. Figs. 2 and 3 respectively show scanning electron micrographs (SEM photographs) of the metal sheet having a carbon material thus obtained at a magnification of 50 times and a magnification of 20,000 times. Fig. 1 is a scanning electron micrograph (SEM photograph) of the porous metal sheet A at a magnification of 50 times.

As is apparent from Figs. 1, 2, and 3, in the obtained metal sheet having a carbon material, carbon fibers and grape-like carbon particles were formed from the porous metal sheet.

In addition, a small amount of sulfur was applied to a porous metal sheet A ("Celmet (registered trademark) #8" manufactured by Sumitomo Electric Industries, Ltd., porosity: 97%, shape: 20 mm × 20 mm × 1.2 mm, Ni present as a transition metal on the surface) as a pre-step of the thermal CVD treatment, and the porous metal sheet A was subjected to an oxidation treatment at 800°C for 20 minutes at an oxygen/nitrogen concentration of 1%/99% and a gas flow rate of 200 cc/min. Next, a thermal CVD treatment was performed for 20 minutes in an atmosphere of 450°C, an ethylene gas concentration of 100%, and a gas flow rate of 50 cc/min to provide a metal sheet in which carbon fibers/carbon particles were formed.

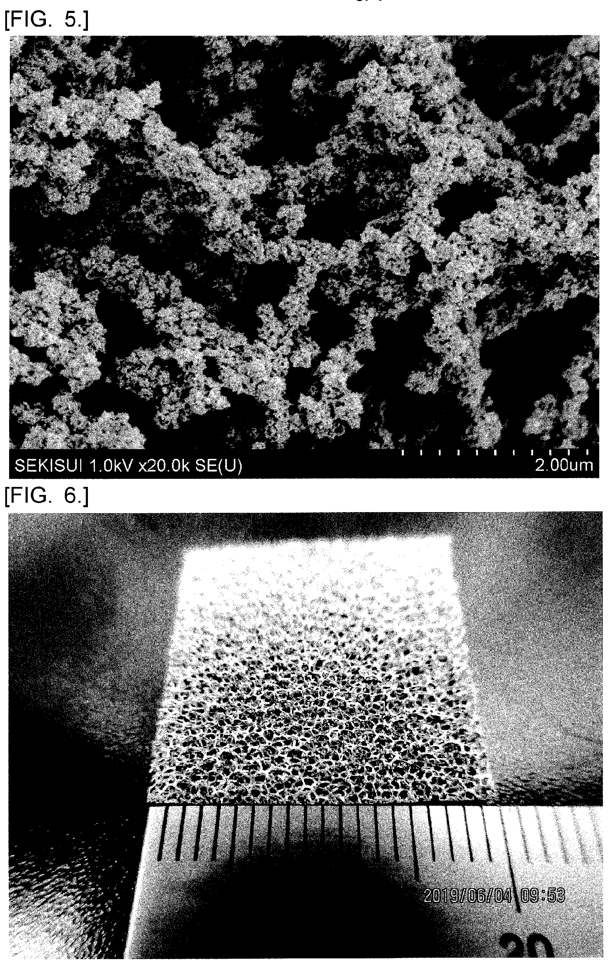

Figs. 4 and 5 respectively show scanning electron micrographs (SEM photographs) of the metal sheet having a carbon material thus obtained at a magnification of 8,000 times and a magnification of 20,000 times.

As is apparent from Figs. 4 and 5, in the obtained metal sheet having a carbon material, grape-like carbon fiber particles were formed from the porous metal sheet.

As is apparent from Figs. 2 to 5, it was confirmed that the surfaces of the metal bodies constituting the porous metal sheets were modified with carbon fibers/carbon particles and that the carbon fibers/carbon particles were disposed in the pores of the porous metal sheets.

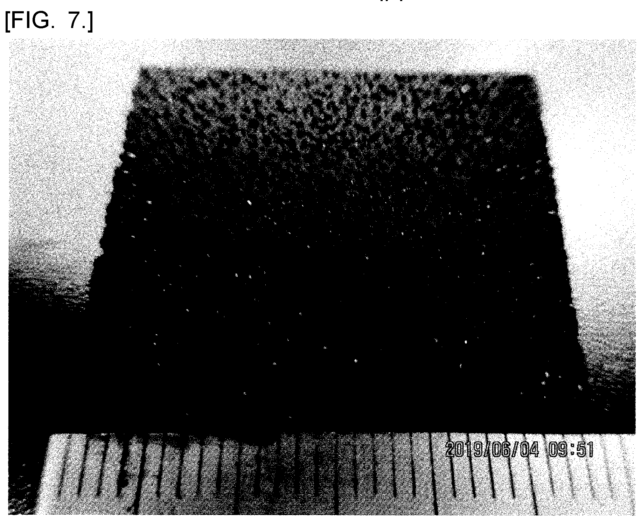

A porous metal sheet B ("Celmet (registered trademark) #4" manufactured by Sumitomo Electric Industries, Ltd., shape: 20 mm × 20 mm × 1.2 mm, Ni present as a transition metal on the surface) was subjected to a thermal CVD treatment for 30 minutes in an atmosphere of 450°C, an ethylene gas concentration of 100%, and a gas flow rate of 50 cc/min in a quartz tube having an inner diameter of 32 mm to obtain a metal sheet in which carbon fibers/carbon particles were formed. Before and after the flow of ethylene gas for 20 minutes, 100% nitrogen gas was caused to flow at a gas flow rate of 100 cc/min. Thereafter, the obtained metal sheet having a carbon material was compressed to a thickness of 0.75 mm. Fig. 7 show a scanning electron micrograph (SEM photograph) of the metal sheet having a carbon material thus obtained at a magnification of 5 times. Fig. 6 is a scanning electron micrograph (SEM photograph) of the porous metal sheet B at a magnification of 5 times.

As is apparent from FIG. 7, it can be seen that compression can be performed simultaneously with the porous metal sheet in the obtained metal sheet having a carbon material.

### (Example 2)

A porous metal sheet A ("Celmet (registered trademark) #8" (Celmet (registered trademark) C8N) manufactured by Sumitomo Electric Industries, Ltd., porosity: 97%, shape: 20 mm × 20 mm × 1.2 mm, Ni present as a transition metal on the surface) having a weight of 0.1679 g was subjected to a thermal CVD treatment for 20 minutes in an atmosphere of 450°C, an ethylene gas concentration of 100%, and a gas flow rate of 50 cc/min. Thereby, a metal sheet having a carbon material in which 0.1325 g of carbon fibers/carbon particles were formed was obtained. When the density of carbon fibers/carbon particles filled in pores (content of carbon fibers/carbon particles in pores) was determined with the specific gravity of carbon fibers/carbon particles as 1.9, the density was 10.3%. In addition, carbon fibers/carbon particles formed in excess of the thickness of the porous metal sheet were removed with a squeegee.

### (Example 3)

A porous metal sheet B ("Celmet (registered trademark) #4" (Celmet (registered trademark) C4N) manufactured by Sumitomo Electric Industries, Ltd., porosity: 92%, shape: 20 mm × 20 mm × 1.2 mm, Ni present as a transition metal on the surface) having a weight of 0.4557 g was subjected to a thermal CVD treatment for 30 minutes in an atmosphere of 450°C, an ethylene gas concentration of 100%, and a gas flow rate of 50 cc/min. Thereby, a metal sheet having a carbon material in which 0.1412 g of carbon fibers/carbon particles were formed was obtained. When the density of carbon fibers/carbon particles filled in pores (content of carbon fibers/carbon particles in pores) was determined with the specific gravity of carbon fibers/carbon particles as 1.9, the density was 12.4%. In addition, carbon fibers/carbon particles formed in excess of the thickness of the porous metal sheet were removed with a squeegee.

### (Example 4)

First, a porous metal sheet A ("Celmet (registered trademark) #8" (Celmet (registered trademark) C8N) manufactured by Sumitomo Electric Industries, Ltd., porosity: 97%, shape: 20 mm × 20 mm × 1.2 mm, Ni present as a transition metal on the surface) having a weight of 0.1299 g was subjected to a thermal CVD treatment for 19.5 minutes in an atmosphere of 450°C, an ethylene gas concentration of 100%, and a gas flow rate of 50 cc/min. Next, the metal sheet in which carbon fibers/carbon particles were formed was surrounded by a 0.6 mm iron plate spacer with a window of 25 mm × 25 mm, sandwiched between polyimide films, and compressed to a thickness of 0.75 mm with a hydraulic press machine. Next, a thermal CVD process was performed again for 0.5 minutes. A metal sheet having a carbon material in which 0.1047 g of carbon fibers/carbon particles were formed by 2 times of thermal CVD treatment was obtained. When the density of carbon fibers/carbon particles filled in pores (content of carbon fibers/carbon particles in pores) was determined with the specific gravity of carbon fibers/carbon particles as 1.9, the density was 18.8%. In addition, carbon fibers/carbon particles formed in excess of the thickness of the porous metal sheet were removed with a squeegee.

### (Example 5)

First, a porous metal sheet B ("Celmet (registered trademark) #4" (Celmet (registered trademark) C4N) manufactured by Sumitomo Electric Industries, Ltd., porosity: 97%, shape: 20 mm × 20 mm × 1.2 mm, Ni present as a transition metal on the surface) having a weight of 0.1679 g was subjected to a thermal CVD treatment for 29.5 minutes in an atmosphere of 450°C, an ethylene gas concentration of 100%, and a gas flow rate of 50 cc/min. Next, the metal sheet in which carbon fibers/carbon particles were formed was surrounded by a 0.6 mm iron plate spacer with a window of 25 mm × 25 mm, sandwiched between polyimide films, and compressed to a thickness of 0.75 mm with a hydraulic press machine. Next, a thermal CVD process was performed again for 0.5 minutes. By 2 times of thermal CVD treatment, a metal sheet having 0.1635 g of a carbon material was obtained. When the density of carbon fibers/carbon particles filled in pores (content of carbon fibers/carbon particles in pores) was determined with the specific gravity of carbon fibers/carbon particles as 1.9, the density was 22.3%. In addition, carbon fibers/carbon particles formed in excess of the thickness of the porous metal sheet were removed with a squeegee.

### (Comparative Example 1)

First, an activated carbon sheet (shape: 20 mm × 20 mm × 0.2 mm (90% activated carbon, 10% binder)) was stacked on a nickel metal sheet (shape: 20 mm ×20 mm ×0.02 mm) to prepare a stack of the activated carbon sheet and the metal sheet.

### (Evaluation)

The metal sheets having a carbon material obtained in Examples 2 to 5 and Comparative Example 1 were sandwiched between iron plates, and the thicknesses at the time of application of hydrostatic pressure of 100 g and 1,000 g per 1 cm² were measured. The results are shown in Table 1 below.

**[Table 1]**

| | Example 2 | Example 3 | Example 4 | Example 5 | Comparative Example 1 |
|---|---|---|---|---|---|
| Sheet type | Porous metal sheet A | Porous metal sheet B | Porous metal sheet A | Porous metal sheet B | Ni plate |
| Carbon material layer | Carbon fibers/ carbon particles | Carbon fibers/ carbon particles | Carbon fibers/ carbon particles | Carbon fibers/ carbon particles | Activated carbon + resin binder |
| Metal sheet thickness (mm) | 1.20 | 1.20 | 0.75 | 0.75 | 0.02 |
| Thickness of carbon material layer (mm) | 1.20 | 1.20 | 0.75 | 0.75 | 0.20 |
| Position of carbon material | Inside metal sheet layer | Inside metal sheet layer | Inside metal sheet layer | Inside metal sheet layer | - |
| Initial thickness, carbon material layer (mm) | 1.20 | 1.20 | 0.75 | 0.75 | 0.22 |
| Thickness when electrode is sandwiched between iron plates and subjected to hydrostatic pressure of 100 g per 1 cm² (mm) | 1.20 | 1.20 | 0.75 | 0.75 | 0.21 |
| Thickness when hydrostatic pressure of 1,000g per 1 cm² is applied (mm) | 1.14 | 1.17 | 0.72 | 0.73 | 0.20 |
| Film thickness change rate 100 g | 0% (<0.25%) | 0% (<0.25%) | 0% (<0.25%) | 0% (<0.25%) | 4.5% |
| Film thickness change rate 1,000 g | 5.0% | 2.5% | 4.0% | 2.7% | 9.1% |
| Film thickness change rate of carbon material layer | Good | Good | Good | Good | Poor |

As is apparent from Table 1, in the metal sheets having a carbon material in Example 2 to 5, the film thickness change rates were 0% and 5.0% or less, respectively, when both hydrostatic pressures of 100 g/cm² and 1000 g/cm² were applied, and it is found that the change was small particularly at a low pressure.

On the other hand, in Comparative Example 1, the film thickness change rates were 4.5% and 9.1% when both hydrostatic pressures of 100 g/cm² and 1,000 g/cm² were applied, respectively. Therefore, it was confirmed that in the metal sheets having a carbon material of Example 2 to 5, the change in film thickness of the carbon fiber/carbon particle layer (carbon material layer) was smaller than that in Comparative Example 1 used at the time of manufacturing a battery, the carbon fibers were hardly separated, and for example, excellent characteristics such as cycle characteristics were stably exhibited when the metal sheet having a carbon material was used for an electrode of an electricity storage device.

## Claims

1. A metal sheet having a carbon material comprising:
a porous metal sheet provided with a transition metal present on a surface; and
a carbon material of at least one of a carbon fiber and a carbon particle, the carbon material being formed from the porous metal sheet,
the carbon material being disposed in a pore of the porous metal sheet.

2. The metal sheet having a carbon material according to claim 1, wherein the carbon material is present inside the porous metal sheet.

3. The metal sheet having a carbon material according to claim 1 or 2, wherein a ratio of the carbon material in the pore of the porous metal sheet is increased by compressing and deforming the metal sheet having a carbon material.

4. The metal sheet having a carbon fiber according to any one of claims 1 to 3, wherein a content of the carbon material in the pore of the porous metal sheet is 20 vol% or more and 70 vol% or less.

5. The metal sheet having a carbon material according to any one of claims 1 to 4, wherein the transition metal contains at least one selected from the group consisting of nickel, iron, and cobalt.

6. An electrode for an electricity storage device, comprising the metal sheet having a carbon material according to any one of claims 1 to 5, the porous metal sheet being a current collector.

7. An electricity storage device comprising the electrode for an electricity storage device according to claim 6.
